# EUROPÄISCHE PATENTSCHRIFT

(11) **EP 3 337 713 B1**
(45) Veröffentlichungstag und Bekanntmachung des Hinweises auf die Patenterteilung: **15.07.2020**
(21) Anmeldenummer: 16767136.1
(22) Anmeldetag: 18.07.2016
(51) Int. Cl.: B62D 15/02

(54) **EINPARKSYSTEM MIT INTERAKTIVER TRAJEKTORIENOPTIMIERUNG**
PARKING SYSTEM WITH INTERACTIVE TRAJECTORY OPTIMIZATION
SYSTÈME D'AIDE AU STATIONNEMENT À OPTIMISATION DE TRAJECTOIRE INTERACTIVE

(30) Priorität: 20.08.2015 DE 102015215918
(43) Veröffentlichungstag der Anmeldung: 27.06.2018
(73) Patentinhaber: Continental Teves AG & Co. OHG, 60488 Frankfurt am Main (DE)
(72) Erfinder: KIRSTEIN, Stephan, 63110 Rodgau (DE); LATTKE, Benedikt, 61130 Nidderau (DE); LÜKE, Stefan, 61191 Rosbach vor der Höhe (DE)
(86) Internationale Anmeldenummer: PCT/DE2016/200325
(87) Internationale Veröffentlichungsnummer: WO 2017/028849

(56) Entgegenhaltungen:
- WO-A1-2006/064544
- DE-A1-102006 026 092
- DE-A1-102010 061 904
- DE-A1-102012 200 725
- US-A1- 2009 309 970
- US-A1- 2014 358 429

## Beschreibung

Die Erfindung betrifft ein Verfahren zum Ermitteln einer angepassten Einparktrajektorie zum autonomen oder teilautonomen Manövrieren eines Fahrzeugs in eine Zielparkposition gemäß dem Anspruch 1 sowie eine entsprechende Vorrichtung gemäß dem Anspruch 7.

Systeme zur Unterstützung des Fahrers durch autonomes oder zumindest teilautonomes Manövrieren eines Fahrzeugs in eine Zielparkposition sind bereits bekannt und mittlerweile Sonderausstattung gehobener Fahrzeugklassen. Bei teilautonomen Systemen erfolgt in der Regel nur eine Lenk- bzw. Querführungsunterstützung, wohingegen bei autonomen Systemen sowohl die Querführung als auch die Längsführung des Fahrzeugs vom System übernommen wird.

Bei den bekannten Systemen wird, insbesondere in Abhängigkeit einer vorherigen Erfassung von Hindernissen in der Fahrzeugumgebung sowie der vorherigen Ermittlung einer geeigneten Zielparkposition, in der Regel mittels geeigneter Pfadplanungsalgorithmen die Einparktrajektorie, d.h. der Pfad auf dem das Fahrzeug mittels des Systems geführt wird, bestimmt. Das jeweilige System ermittelt dabei eine valide, fahrbare und kollisionsfreie Trajektorie und bietet dem Fahrer je nach Systemausprägung eine Unterstützung durch eine visuelle Darstellung der Parksituation sowie durch eine autonome Querführung und/oder Längsführung des Fahrzeugs.

Im Allgemeinen wird bei einer solchen Funktionsumsetzung von einer realitätsgetreuen Umfelderfassung mittels der Sensoren ausgegangen. Bei der Vermessung der Parklücke sowie bei der Erkennung von Hindernissen können jedoch Ungenauigkeiten und Fehler auftreten, insbesondere Falscherkennungen oder Nichterkennungen von relevanten Hindernissen bzw. Objekten. Infolge werden falsche Informationen in die Pfadplanung integriert und/oder fehlende Informationen bei der Pfadplanung überhaupt nicht berücksichtigt.

Es können sich um Umfeld des Fahrzeugs beispielsweise Objekte befinden, die von den verwendeten Sensoren nicht erkannt werden. Infolge werden diese Objekte bei der Pfadplanung auch nicht berücksichtigt. Falscherkennungen hingegen können dazu führen, dass freie Parkflächen nicht als solche erkannt werden.

Insgesamt führen diese Nachteile allgemein zu einer Abnahme der Akzeptanz, insbesondere wenn durch falsche bzw. fehlende Informationen Parkvorgänge abgebrochen werden müssen, wenn es zu Kollisionen kommt, oder wenn trotz ausreichend großer Freifläche die Parkfunktion vom System nicht angeboten wird.

Die vorangehend genannten fehlenden bzw. falschen Hindernisinformationen können vor allem durch systemische Beschränkungen des gewählten Sensorsetups oder aufgrund von verschiedenen Umwelteinflüssen (z.B. Dunkelheit oder Regen) hervorgerufen werden.

Die US 2009/0309970 A1 ist als nächstliegender Stand der Technik zu sehen und beschreibt ein Fahrzeugbetriebssystem mit einem Aufnahmegerät zur Erfassung der Fahrzeugumgebung und einer Anzeigeeinrichtung zum Anzeigen der Umgebung und einer errechneten Trajektorie des Fahrzeugs, wobei die Trajektorie manuell veränderbar ist.

Die US 2014/0358429 A1 zeigt ein Verfahren zur Eingabe einer Fahrstrecke eines Fahrzeug-Anhänger-Gespanns, wobei das Gespann in einer Vogelperspektive auf einem Touchscreen angezeigt wird und eine Eingabe einer gewünschten Fahrstrecke durch einen Benutzer erkannt werden kann.

Die WO 2006/064544 A1 beschreibt eine Vorrichtung zum Anzeigen einer vorhergesagten Fahrstrecke eines Fahrzeugs, wobei die auf einem Display angezeigte Fahrstrecke durch einen Benutzer manipulierbar ist.

Die DE 10 2010 061 904 A1 offenbart eine Fahrhilfevorrichtung mit mindestens einem Sensor, wobei während eines semiautomatischen Einparkvorgangs eine fortlaufende Vermessung einer Parklücke durchgeführt und bei Erkennung eines Hindernisses selbständig eine Korrektur des ursprünglich berechneten Einparkvorgangs vorgenommen wird.

In der DE 10 2012 200 725 A1 wird eine Fernsteuerung von Parkiermanövern beschrieben, wobei dem Benutzer auf der Fernsteuerung neben Objektgrenzinformationen auch relevante Strukturen in der Fahrzeugumgebung angezeigt werden.

In der DE 10 2006 026 092 A1 betrifft ein Verfahren zur Steuerung eines Einparkvorgangs, wobei ein virtuelles Zielobjekt in einem Umgebungsbild durch eine Bedienereingabe verändert werden kann, die veränderte Zielposition als Sollposition für den Einparkvorgang übernommen wird und eine Trajektorie ermittelt wird.

Es ist die Aufgabe der Erfindung eine Lösung für die vorangehend genannte Problemstellung anzugeben.

Diese Aufgabe wird erfindungsgemäß durch ein Verfahren zum Ermitteln einer Einparktrajektorie nach Anspruch 1 gelöst.

Mittels des erfindungsgemäßen Verfahrens erhält der Nutzer sowohl eine Rückmeldung über die Güte der Umfelderfassung, insbesondere durch die Anzeige der Fahrzeugumgebung und der zuvor ermittelten Einparktrajektorie, als auch die Möglichkeit einer direkten Einflussnahme auf die Pfadplanung, d.h. auf die Ermittlung der Einparktrajektorie. Der Nutzer kann insbesondere erkennen, ob bei der zuvor ermittelten Einparktrajektorie alle relevanten Objekte bzw. Hindernisse in der Fahrzeugumgebung berücksichtigt wurden und bei Bedarf, insbesondere bei fehlenden oder falschen Informationen, durch manuelle Bedieneingaben eine optimierte Pfadplanung bewirken. Hierdurch können Kollisionen und Abbrüche bei autonomen und teilautonomen Einparkmanövern deutlich reduziert werden. Zudem kann das erfindungsgemäße Verfahren einen Zugewinn an Komfort für den Nutzer bedeuten. Dies ergibt sich vorrangig dadurch, dass durch den Nutzer größere Abstände zu kritischen Hindernissen erzwungen werden können. Beispielsweise kann die Entfernung der Einparktrajektorie zu einer Ecke eines Hindernisses derart beeinflusst werden, so dass ein größerer Abstand zum Hindernis eingehalten und dadurch die Parklücke während des Einparkvorgangs für den Nutzer besser einsehbar ist. Ein weiteres Beispiel ist Möglichkeit für den Nutzer, die Einparktrajektorie in Abhängigkeit davon zu beeinflussen, ob es sich bei den Hindernissen in der Fahrzeugumgebung um solide Objekte (z.B. andere Fahrzeuge oder Begrenzungspfosten) oder weniger solide Objekte (z.B. Büsche oder Pflanzen) handelt. In so einem Fall kann der Nutzer beispielsweise bewirken, dass die Einparktrajektorie mit größerem Abstand zu soliden und/oder mit geringerem Abstand zu weniger soliden Objekten bzw. Hindernisse geplant wird.

Das erfindungsgemäße Verfahren kann beispielsweise mittels Software in einem Steuergerät eines Fahrerassistenzsystems eines Fahrzeugs integriert sein. Insbesondere können die aus dem Stand der Technik bekannten Einparkassistenzsysteme, bei denen bereits eine Erfassung von Parklücken und Hindernissen mittels geeigneter Sensoreinrichtungen erfolgt und bei denen mittels entsprechender Pfadplanungsalgorithmen eine Einparktrajektorie für eine autonome oder teilautonome Einparkfunktion ermittelt wird, gemäß dem erfindungsgemäßen Verfahren weitergebildet sein.

Mit der hier verwendeten Terminologie "autonomes und teilautonomes Manövrieren eines Fahrzeugs in eine Zielparkposition" ist insbesondere gleichermaßen ein "automatisches bzw. teilautomatisches Einparken eines Fahrzeugs" zu verstehen. Diese beiden Terminologien werden im allgemeinen Sprachgebrauch häufig synonym verwendet und sind auch im Rahmen der vorliegenden Erfindung als gleichbedeutend zu verstehen.

Bei der Anzeigeeinrichtung, auf der die Anzeige der Fahrzeugumgebung und die Ausgabe der zuvor ermittelten Einparktrajektorie erfolgen, handelt es sich vorzugsweise um einen Bildschirm im Fahrzeuginnenraum. Dabei kann es sich um einen Bildschirm handeln, der zusätzlich zur Anzeige anderer Informationen an den Nutzer verwendet wird, insbesondere wenn keine Parksituation vorliegt. Alternativ oder zusätzlich kann es sich bei der Anzeigeeinrichtung auch um eine mobile Anzeigeeinrichtung handeln, beispielsweise um ein Handy oder einen Tablet PC, so dass der Nutzer auch außerhalb des Fahrzeug erfindungsgemäß die Parksituation angezeigt bekommt und die Einparktrajektorie manuell beeinflussen kann.

Bei dem Nutzer handelt es sich vorzugsweise um den Fahrer bzw. Fahrzeugführer des Fahrzeugs.

Bei der perspektivischen Darstellung der Fahrzeugumgebung handelt es sich vorzugsweise um eine Darstellung des gesamten Manöverraums, in dem sich das Fahrzeug während des autonomen oder teilautonomen Manövrierens in die Zielparkposition bewegt. Somit kann es sich beispielsweise um eine Anzeige der vorausliegenden, der rückwärtigen und/oder um die das gesamte Fahrzeug umgebende Fahrzeugumgebung handeln. Bei der Darstellung kann es sich sowohl um eine virtuelle als auch eine reale Darstellung der Fahrzeugumgebung handeln. Unter der realen Darstellung der Fahrzeugumgebung ist insbesondere eine Darstellung basierend auf Bilddaten, die von Fahrzeugkameras erfasst wurden, zu verstehen. Unter virtuelle Darstellung ist insbesondere eine computergenerierte Darstellung zu verstehen, die vorzugsweise dann verwendet wird, wenn keine realen Bilddaten der Fahrzeugumgebung vorhanden sind.

Vorzugsweise erfolgt die Darstellung der Fahrzeugumgebung in Form einer Draufsicht (Vogelperspektive) auf die Parksituation, d.h. aus einer virtuellen Kameraposition oberhalb des Fahrzeugs. Diese Darstellungsform wird auch als Top View, Surround View oder Birds Eye View bezeichnet. Bevorzugt wird hierzu im Rahmen des erfindungsgemäßen Verfahrens ein Kamerasystem verwendet, welches mehrere Einzelkameras umfasst, die zusammen das gesamte Umfeld um das Fahrzeug erfassen, d.h. mehrere Kameras mit überlappenden Sichtbereichen, die den vorderen, hinteren sowie die seitlichen Umgebungsbereiche um das Fahrzeug erfassen. Ein solches Kamerasystem findet insbesondere bei bekannten Surround View Systemen Anwendung, wobei die von den einzelnen Kameras erfassten Bilder von einem zentralen Steuergerät zu einem Gesamtbild zusammengesetzt werden, welches wiederum transformiert und den Fahrzeuginsassen angezeigt wird, insbesondere in Form einer sogenannten Top View Darstellung. In diesem Fall kann das erfindungsgemäße Verfahren die Kameras eines solchen Surround View Systems nutzen und direkt in dem Steuergerät des Surround View Systems implementiert sein.

Die Ausgabe, d.h. die Darstellung, der zuvor ermittelten Einparktrajektorie erfolgt im Rahmen des erfindungsgemäßen Verfahrens vorzugsweise in Form einer überlagerten Darstellung (Overlay) in der angezeigten Fahrzeugumgebung. Bei der zuvor ermittelten Einparktrajektorie kann es sich entweder um eine Ausgangstrajektorie handeln, d.h. um die Trajektorie, die ursprünglich bzw. eingangs vom System ermittelt wurde und bei der noch keine Anpassung aufgrund einer manuellen Bedieneingabe des Nutzers erfolgt ist, oder um eine bereits einmalig oder mehrfach gemäß dem erfindungsgemäßen Verfahren angepasste Einparktrajektorie.

Die manuelle Bedieneingabe kann beispielsweise durch entsprechende Bedienelemente an bzw. im Bereich der Anzeigevorrichtung erfolgen. Vorzugsweise jedoch erfolgen sowohl die Darstellung bzw. die Ausgabe der Fahrzeugumgebung und Einparktrajektorie sowie die manuelle Bedieneingabe durch den Nutzer über eine berührungsempfindliche Anzeigeeinrichtung (Touchscreen). Zur Differenzierung gegenüber möglicher Blickwinkeländerungen des Bildes kann in einer besonderen Ausführungsform auch die Bewegung mit mindestens mehr als einem Finger möglich sein.

Im Rahmen des erfindungsgemäßen Verfahrens erfolgt vorzugsweise eine Neuberechnung der zuvor ermittelten Einparktrajektorie in Abhängigkeit bzw. unter Berücksichtigung der manuellen Bedieneingabe des Nutzers. Anschließend kann dem Nutzer die angepasste Einparktrajektorie als neue Einparktrajektorie in der Darstellung der Fahrumgebung ausgegeben werden. Daraufhin kann das autonome bzw. teilautonome Einparkmanöver basierend auf der angepassten Einparktrajektorie erfolgen oder es kann dem Nutzer erneut die Möglichkeit gegeben werden, die Einparktrajektorie mittels manueller Bedieneingabe anzupassen. Im ersteren Fall kann beispielsweise eine Möglichkeit zur Bestätigung von Zielposition und/oder Einparktrajektorie durch den Nutzer vorgesehen sein. Im letzteren Fall würde die bereits einmal (oder auch bereits mehrfach) angepasste Einparktrajektorie im Rahmen des Verfahrens wiederum als zuvor ermittelte Einparktrajektorie dienen.

Bei einer bevorzugten Ausgestaltung des erfindungsgemäßen Verfahrens handelt es sich bei der manuellen Bedieneingabe wenigstens um ein Stauchen, Strecken und/oder Verschieben der zuvor ermitteln Einparktrajektorie. Hierzu kann die Einparktrajektorie in Segmente unterteilt und entsprechend angezeigt sein, wobei der Nutzer, beispielsweise bei Eingabe über ein Touchscreen, die Segmente auswählen und verschieben und/oder stauchen bzw. strecken kann, letzteres insbesondere dann, wenn die Einparktrajektorie Kreisbögen bzw. Kreisbogensegmente umfasst.

Bei einer weiteren bevorzugten Ausgestaltung des erfindungsgemäßen Verfahrens handelt es sich bei der manuellen Bedieneingabe wenigstens um ein Löschen, Neusetzen und/oder Verändern, beispielsweise Verschieben, von Wegpunkten der zuvor ermittelten Einparktrajektorie. Hierzu kann die Einparktrajektorie in Wegpunkte unterteilt werden, beispielsweise mit gleichmäßen Abständen zueinander oder in Abhängigkeit von Hindernissen oder Fahrtrichtungsänderungen, wobei der Nutzer, beispielsweise bei Eingabe über ein Touchscreen, Wegpunkte auswählen und verschieben und/oder einzelne Wegpunkte löschen bzw. neue Wegpunkte setzen kann.

Im Rahmen des erfindungsgemäßen Verfahrens können Hindernisse, die mithilfe der Sensoreinrichtungen des Fahrerassistenzsystems, bei dem das Verfahren zu Einsatz kommt, erkannt wurden, für den Nutzer in der Darstellung der Fahrzeugumgebung hervorgehoben sein, beispielweise durch sogenanntes Highlighting bzw. durch geeignete Overlays. Hierdurch kann der Nutzer sehr schnell erkennen, ob Hindernisse bzw. Objekte falsch oder überhaupt nicht erkannt wurden. Darauf basierend kann der Nutzer gemäß dem erfindungsgemäßen Verfahren die Einparktrajektorie manuell beeinflussen, um auf falsch erkannte oder nicht erkannte Hindernisse zu reagieren. Im Rahmen des erfindungsgemäßen Verfahrens ist vorgesehen, dass der Nutzer mittels manueller Bedieneingabe einzelne Hindernisse löschen kann, insbesondere Hindernisse, die fälschlicherweise als solche erkannt wurden, oder dass der Nutzer manuell Hindernisse hinzufügen kann, insbesondere Hindernisse, die nicht erkannt wurde. Das Verfahren kann somit die Möglichkeit des interaktiven Einfügens von virtuellen Hindernissen bieten. Das Einfügen kann beispielsweise durch einfache Punktgesten erfolgen, wodurch Standardobjekte mit vorzugsweise vorab definierten Abmessungen gesetzt werden können, oder beispielsweise durch einfache Strichgesten, wodurch z.B. Freiformobjekte gezeichnet und gesetzt werden können. Im Falle von Freiformobjekten hat der Nutzer insbesondere die Möglichkeit, Hindernisse, die vom System nicht als solche erkannt wurde, direkt in der Darstellung der Fahrzeugumgebung nachzuzeichnen. Weiterhin kann vorgesehen sein, dass das Setzen von Hindernissen auch außerhalb des Messbereichs einzelner Sensorsysteme ermöglicht wird. Beispielsweise in einem Bereich, der zwar vom Kamerasystem erfasst und in der Darstellung der Fahrzeugumgebung angezeigt wird, der aber außerhalb des Messbereichs von den verwendeten Abstandssensoren liegt, beispielsweise von Ultraschallsensoren, und in dem Hindernisse somit noch nicht als solche erkannt wurden. Die manuell eingefügten Hindernisse, verknüpft mit einer vorzugsweise vorhandenen sensorbasierten Hinderniserfassung, können so in Kombination für die nutzeroptimierte Ermittlung der angepassten Einparktrajektorie herangezogen werden.

Gemäß einer bevorzugten Ausgestaltung des erfindungsgemäßen Verfahrens kann weiterhin vorgesehen sein, dass manuelle Bedieneingabe eine Veränderung der vertikalen Ausdehnung, d.h. der Höhe, und/oder der horizontalen Ausdehnung, d.h. der Länge und Breite, von Hindernissen umfasst, insbesondere von virtuellen Objekten in der angezeigten Fahrzeugumgebung. Bei den virtuellen Objekten handelt es sich dabei, wie vorangehend beschrieben, vorzugsweise um in der Darstellung der Fahrzeugumgebung hervorgehobene Objekte bzw. Hindernisse. Dabei kann zusätzlich die horizontale und vertikale Ausdehnung der Objekte dargestellt und durch den Nutzer mittels manueller Bedieneingabe verändert werden. Beispielsweise kann in dem Zusammenhand ein Bordstein, der in Wirklichkeit vom Fahrzeug ohne Probleme überfahrbaren werden könnte, vom System aber als nicht überfahrbares Hindernis erkannt wurde, entsprechend manuelle angepasst werden.

Durch das vorangehend beschriebene manuelle Hinzufügen, Entfernen oder Verändern von Hindernissen ergibt sich die Möglichkeit, nutzergesteuert bestimmte Hindernisse zu korrigieren, die z.B. komplett falsch oder beispielsweise in der falschen Größe bzw. Ausdehnung erkannt wurden, oder die potenziell überfahrbar sind, was insgesamt zu einer erhöhten Verfügbarkeit des Einparksystems führt.

Durch das Hinzufügen bzw. Ändern von Hindernissen kann insbesondere auch indirekt die Zielparkposition beeinflusst werden, beispielsweise um ein leichteres Aussteigen zu ermöglich oder um einen größeren Abstand zu potenziell kritischen Hindernissen zu erreichen.

Erfindungsgemäß wird eine Umsetzbarkeit der angepassten Einparktrajektorie ermittelt. Dabei kann die in Abhängigkeit der manuellen Bedieneingabe angepasste Einparktrajektorie entweder im Anschluss an deren Ermittlung oder fortlaufend, insbesondere bereits während der manuellen Bedieneingabe durch den Nutzer, hinsichtlich deren Umsetzbarkeit geprüft werden. Dabei wird vorzugsweise geprüft, ob weiterhin eine valide, fahrbare und kollisionsfreie Trajektorie vorliegt. Somit wird die angepasste Einparktrajektorie vorzugsweise immer noch vom System bewertet, um schwerwiegende Fehleingaben zu vermeiden.

Erfindungsgemäß erhält der Nutzer eine Rückmeldung über die Umsetzbarkeit der angepassten Einparktrajektorie. Die Rückmeldung an den Nutzer erfolgt visuell in der Darstellung bzw. Ausgabe von Fahrzeugumgebung und Einparktrajektorie. Dabei können beispielsweise Abschnitte der Einparktrajektorie farblich hervorgehoben werden, die nicht kollisionsfrei umsetzbar sind. Die Ausgabe an den Nutzer kann dabei erst nach der Ermittlung der angepassten Einparktrajektorie erfolgen oder bereits fortlaufend, insbesondere in Echtzeit während der manuellen Bedieneingabe.

Weiterhin kann die manuelle Bedieneingabe in Abhängigkeit der Umsetzbarkeit der sich daraus ergebenden angepassten Einparktrajektorie eingeschränkt sein. Demnach können dem Nutzer im Rahmen des Verfahrens nur manuelle Eingabe ermöglicht werden, die in einer umsetzbaren Einparktrajektorie resultieren würden.

In einer besonderen Ausführungsform kann die manuelle Pfadkorrektur auch in einem vollautomatisch planenden System, dem die Hindernisse bzw. Objekte bekannt sind, in der Form ausgeführt werden, dass die Farbe während der Verschiebung die Kollisionsfreiheit indiziert.

In einer besonderen Ausführungsform ist die Bewegungsmöglichkeit der Trajektorie aufgrund der Fahrtrichtung und der vorgeplanten Lückenposition vorab limitiert und nur in einer Richtung verschiebbar.

In einer besonderen Ausführungsform ist die Bewegungsmöglichkeit der Trajektorie digitalisiert, um nur eine begrenzte Zahl von Pfaden anwählen zu müssen und weitere Eingabemöglichkeiten wie einen Menüknopf zu ermöglichen.

Die Erfindung umfasst weiterhin eine Vorrichtung für ein Fahrzeug, insbesondere ein Fahrerassistenzsystem, das zur Umsetzung des erfindungsgemäßen Verfahrens nach einer der vorangehend beschriebenen Ausgestaltungen ausgebildet ist.

## Patentansprüche

1. Verfahren zum Ermitteln einer Einparktrajektorie, für ein Fahrerassistenzsystem zum autonomen oder teilautonomen Manövrieren eines Fahrzeugs in eine Zielparkposition, wobei
einem Nutzer auf einer Anzeigeeinrichtung eine perspektivische Darstellung der Fahrzeugumgebung angezeigt sowie eine zuvor ermittelte Einparktrajektorie in der Darstellung der Fahrzeugumgebung ausgegeben wird, wobei die zuvor ermittelte Einparktrajektorie mittels wenigstens einer manuellen Bedieneingabe durch den Nutzer beeinflussbar ist und es sich bei der manuellen Bedieneingabe wenigstens um ein Löschen, Neusetzen und/oder Verändern von Hindernissen handelt, und wobei
in Abhängigkeit der manuellen Bedieneingaben eine angepasste Einparktrajektorie ermittelt wird und dem Nutzer während der manuellen Bedieneingabe eine visuelle Rückmeldung über die Umsetzbarkeit der angepassten Einparktrajektorie ausgegeben wird.

2. Verfahren nach Anspruch 1, **dadurch gekennzeichnet, dass** es sich bei der manuellen Bedieneingabe wenigstens um ein Stauchen, Strecken und/oder Verschieben der zuvor ermittelten Einparktrajektorie handelt.

3. Verfahren nach einem der vorangegangenen Ansprüche,
**dadurch gekennzeichnet, dass**
es sich bei der manuellen Bedieneingabe wenigstens um ein Löschen, Neusetzen und/oder Verändern von Wegpunkten der zuvor ermittelten Einparktrajektorie handelt.

4. Verfahren nach Anspruch 3, **dadurch gekennzeichnet, dass** das Verändern der Hindernisse ein Verändern der vertikalen und/oder horizontalen Ausdehnung der Hindernisse umfasst.

5. Verfahren nach einem der vorangehenden Ansprüche, **dadurch gekennzeichnet, dass**
die manuelle Bedieneingabe in Abhängigkeit der Umsetzbarkeit eingeschränkt ist.

6. Verfahren nach einem der vorangegangenen Ansprüche,
**dadurch gekennzeichnet, dass**
dem Nutzer mehrere zuvor ermittelte Einparktrajektorien in der Darstellung der Fahrzeugumgebung ausgegeben werden und es sich bei der manuellen Bedieneingabe um eine Auswahl einer bevorzugten Einparktrajektorie handelt.

7. Vorrichtung für ein Fahrzeug, insbesondere ein Fahrerassistenzsystem, wobei die Vorrichtung zur Umsetzung eines Verfahrens nach einem der vorangehenden Ansprüche ausgebildet ist.

## Claims

1. Method for determining a parking trajectory, for a driver assistance system for autonomously or partially autonomously manoeuvring a vehicle into a target parking position,
wherein a perspective representation of the surroundings of the vehicle is displayed to a user on a display apparatus, and a previously determined parking trajectory is output in the representation of the surroundings of the vehicle,
wherein the previously determined parking trajectory can be influenced by the user by means of at least one manual operator control input, and the manual operator control input comprises at least deletion, resetting and/or changing of obstacles, and wherein
an adapted parking trajectory is determined in accordance with the manual operator control inputs, and visual feedback about the implementability of the adapted parking trajectory is output to the user during the manual operator control input.

2. Method according to Claim 1, **characterized in that** the manual operator control input comprises at least compressing, stretching and/or shifting the previously determined parking trajectory.

3. Method according to one of the preceding claims, **characterized in that** the manual operator control input comprises at least deletion, resetting and/or changing of reference points of the previously determined parking trajectory.

4. Method according to Claim 3, **characterized in that** the changing of the obstacles comprises changing the vertical and/or horizontal extent of the obstacles.

5. Method according to one of the preceding claims, **characterized in that** the manual operator control input is limited in accordance with the implementability.

6. Method according to one of the preceding claims, **characterized in that**
a plurality of previously determined parking trajectories are output to the user in the representation of the surroundings of the vehicle, and the manual operator control input is a selection of a preferred parking trajectory.

7. Device for a vehicle, in particular a driver assistance system, wherein the device is designed to implement a method according to one of the preceding claims.

## Revendications

1. Procédé de détermination d'une trajectoire d'entrée en stationnement pour un système d'assistance au conducteur destiné à manœuvrer de manière autonome ou semi-autonome un véhicule dans une position de stationnement cible,
une représentation en perspective de l'environnement du véhicule étant affichée à l'attention d'un utilisateur sur un dispositif d'affichage et une trajectoire d'entrée en stationnement déterminée précédemment étant délivrée dans la représentation de l'environnement du véhicule,
la trajectoire d'entrée en stationnement déterminée précédemment pouvant être influencée par l'utilisateur au moyen d'au moins une saisie de commande manuelle et la saisie de commande manuelle étant au moins un effacement, une redéfinition et/ou une modification d'obstacles, et une trajectoire d'entrée en stationnement adaptée étant déterminée en fonction de la saisie de commande manuelle et un retour visuel à propos de l'aptitude à la mise en œuvre de la trajectoire d'entrée en stationnement adaptée étant délivré à l'attention de l'utilisateur pendant la saisie de commande manuelle.

2. Procédé selon la revendication 1, **caractérisé en ce que** la saisie de commande manuelle est au moins une compression, une extension et/ou un décalage de la trajectoire d'entrée en stationnement déterminée précédemment.

3. Procédé selon l'une des revendications précédentes, **caractérisé en ce que** la saisie de commande manuelle est au moins un effacement, une redéfinition et/ou une modification de points de cheminement de la trajectoire d'entrée en stationnement déterminée précédemment.

4. Procédé selon la revendication 3, **caractérisé en ce que** la modification des obstacles comprend une modification de l'extension verticale et/ou horizontale des obstacles.

5. Procédé selon l'une des revendications précédentes, **caractérisé en ce que** la saisie de commande manuelle est limitée en fonction de l'aptitude à la mise en œuvre.

6. Procédé selon l'une des revendications précédentes, **caractérisé en ce que** plusieurs trajectoires d'entrée en stationnement déterminées précédemment sont délivrées à l'attention de l'utilisateur dans la représentation de l'environnement du véhicule et la saisie de commande manuelle est une sélection d'une trajectoire d'entrée en stationnement préférentielle.

7. Arrangement pour un véhicule, notamment un système d'assistance au conducteur, l'arrangement étant configuré pour mettre en œuvre un procédé selon l'une des revendications précédentes.
